# EUROPEAN PATENT SPECIFICATION

(11) **EP 3 187 404 B1**
(45) Date of publication and mention of the grant of the patent: **09.05.2018**
(21) Application number: 16204693.2
(22) Date of filing: 16.12.2016
(51) Int. Cl.: B62K 21/26, B25G 1/10

(54) **HANDLE GRIP SLEEVE STRUCTURE FOR A BICYCLE**
HANDGRIFFHÜLSENSTRUKTUR FÜR EIN FAHRRAD
STRUCTURE DE MANCHON DE PRÉHENSION DE POIGNÉE POUR UNE BICYCLETTE

(30) Priority: 28.12.2015 TW 104220894 U
(43) Date of publication of application: 05.07.2017
(73) Proprietor: Ritchey Design, Inc., Sparks, NV 89434 (US)
(72) Inventor: Ritchey, Thomas W., Woodside, CA 94062 (US)
(74) Representative: Schlimme, Wolfram

(56) References cited:
- CN-U- 2 122 112
- US-A- 4 937 429
- US-A- 6 035 742
- US-B1- 6 263 759

## Description

This application claims a priority of Taiwanese Utility Model application no. 104220894 (TW 20150220894 U) of December 28, 2015.

### FIELD OF THE INVENTION

The present invention relates to a handle grip sleeve structure for a bicycle in which an outer fitting part and an inner fitting part are securely fitted on the handle grip of the bicycle and have a secure fit and also enhanced using comfort.

### BACKGROUND OF THE INVENTION

A bicycle handle grip sleeve is a very important man-machine interface between a bicycle rider and his vehicle, the bicycle. The rider uses the handle grip sleeve to send control commands to the bicycle and to obtain feedback from the bicycle to his hands. This important function requires that the tactile information flow from the rider's hand via the handle grip sleeve to the handlebar and to the steering components as well as from there back to the rider's hand is as direct and as unaltered as possible. Consequently, a bicycle handle grip sleeve needs to firmly fit on the handlebar and any movement of the handle grip sleeve relative to the handlebar, axial as well as circumferential movement, is to be avoided. When riding a bicycle, in particular during an athletic manner of riding a bicycle, a bicycle rider exerts high forces including torsion forces to the handle grip sleeve due to the movements of his body and his arms. A bicycle handle grip sleeve should withstand such torsion moments and should not rotate on the handlebar when such torsion moments are applied to the handle grip sleeve. The handle grip sleeve is thus to be kept from rotating on the handlebar.

In order to achieve this object, various designs of handle grip sleeves are already known. There are handle grip sleeves of a flexible and elastic material known with a bore having an inner diameter which is slightly smaller than the outer diameter of the handlebar. There are also handle grip sleeves known which are mounted to the handlebar with a clamping mechanism provided at one end or at both ends of the grip sleeve. However, the sleeve portion between the clamping mechanisms can still twist on the handlebar.

Another type of handle grip sleeve is hollow and has a first casing made of rigid material so as to fit on the bicycle handlebar, and the first casing is covered by a second casing made of flexible, soft material so that a user grips the handle grip sleeve comfortably, wherein the first casing is fitted to or retained with the second casing. These handle grip sleeves are thus made of two components, a first component of a harder material locking onto the handlebar in a mechanical way by a clamping mechanism or by another mounting mechanism and - more or less - withstanding torsional movements, and a second tubular component of a softer material fixed to the first component. However, even these clamping mechanisms are not completely reliable and they tend to fail and slip when the torsion moment applied to the grip sleeve by a bicycle rider's hand is high enough.

A known handle grip sleeve structure for a bicycle is disclosed in TW Utility Model M 349370 U (application No. 097213669) and contains at least one inflexible elongated sheet which has an internal face, an external face, a first segment, a second segment, and two elongated fringes. The internal face contacts an outer surface of the bicycle handlebar, at least one of the first segment and the second segment has a mounting section extending outwardly. The handle grip sleeve structure also contains at least one tubular sleeve made of flexible material and covering a main part of a middle section of the inflexible elongated sheet and the two elongated fringes so as to expose the mounting section. The at least one tubular sleeve is fitted on the bicycle handlebar, and at least one retainer is configured to fix the first segment and the mounting section on the bicycle handlebar.

However, the at least one flexible tubular sleeve of this known embodiment moves easily relative to the inflexible elongated sheet and removes from the inflexible elongated sheet.

Another known handle grip sleeve is disclosed in TW Utility Model No. 410779 U (application No. 088211081) and contains a first fitting part, a second fitting part, and a bushing. The first fitting part is made of inflexible material and is in a hollow tube shape. The first fitting part has a shoulder, an opening connecting with the shoulder, a through orifice defined between two fringes of the shoulder so as to accommodate a screw bolt. The first fitting part also has multiple apertures equidistantly arranged on an inner surface thereof. The bushing is in a circular tube shape and is fitted on the shoulder of the first fitting part, and the bushing has a plurality of holes arranged on a peripheral wall thereof and corresponding to the multiple apertures of the first fitting part. The second fitting part is made of flexible material and covers the first fitting part and the bushing, and the second fitting part has a flange with respect to the shoulder of the first fitting part. Nevertheless, the first fitting part cannot fit with the bushing firmly.

US 6 263 759 B1, which is considered being the closest prior art, shows and describes a handlebar grip assembly which will not rotate when attached to a handlebar. This assembly has an outer, flexible grip fixed to an inner rigid shell having lengthwise protrusions at the free ends thereof. Rigid clamps are firmly mounted to the handle bar and are provided with recess means accommodating the protrusions.

US 4 937 429 A shows and describes a heated handle grip having a central hollow core around which heating wires are helically wound.

US 6 035 742 A shows and describes a handlebar grip having an inner sleeve with longitudinally extending ribs on the outer surface thereof. The inner sleeve is fixed to the handlebar by clamping means which are mounted to the inner sleeve by positive locking. A soft outer hand engaging grip is mounted around the inner sleeve wherein inner longitudinal grooves in the radially inner surface of the hand engaging grip accommodate the ribs of the inner sleeve.

CN 2 122 112 U shows and describes a handlebar grip with a cylindrical octagonal shape. A cylindrical tubular inner body of octagonal cross section is made of a hard material and is provided on its outer surface with blind holes which accommodate portions of an outer tubular grip means of rubber which is molded around the inner body.

The present invention has arisen to mitigate and/or obviate the afore-described disadvantages and to create a new reliable handle grip sleeve structure.

### SUMMARY OF THE INVENTION

The object to be solved by the present invention is to provide a handle grip sleeve structure which is securely fitted to a handle grip of a bicycle during the use of the bicycle even when the handle grip is a lightweight construction with a low wall thickness and/or a lightweight material and which reliably fits to a handle bar even during extreme athletic bicycle rides.

This object is solved by a handle grip structure with the features of claim 1.

To obtain above-mentioned objectives, a handle grip sleeve structure provided by the present invention comprises: a first, outer fitting part, a second, inner fitting part, and a retainer.

The inner fitting part is made of an inflexible material and is adapted to fit on the handle grip, and the inner fitting part includes a circumferential piece wound in a helix-like tubular shape, a helical slot separating the windings of the circumferential piece, and at least one mounting section extending outwardly from a first end of the inner fitting part. Although the material itself is inflexible and can be hard or rigid, the band-like formed inner fitting part is flexible and can be wound around a handlebar.

The outer fitting part is formed in a cylindrical tubular shape and is made of a flexible material, preferably a soft material, wherein said outer fitting part is adapted to fit on a handle grip thereby covering the inner fitting part and wherein said outer fitting part has a helical groove formed on an inner circumferential wall of the outer fitting part.

Thus, the helically wound circumferential piece of said inner fitting part is accommodated within said helical groove formed in the flexible material of said outer fitting part in the inner wall thereof when the inner fitting part is covered by the outer fitting part. In this way the circumferential piece engages with the helical groove of the outer fitting part, and the helical slot of the inner fitting part retains with the inner wall of the outer fitting part.

The retainer is formed in a slit ring shape and includes a slit opening defined between two opposing end sides or end portions of the retainer. The retainer is adapted to fit on the at least one mounting section and includes two orifices formed on the two sides or in the two end portions of the retainer, respectively, and a locking bolt extends through the two orifices in order to clamp the at least one mounting section on the handle grip.

Accordingly, the inner fitting part is made of a hard or rigid material, the circumferential piece of the inner fitting part is wound in the helical tube shape, and the helical slot is separating the windings of the helically wound circumferential piece. The outer fitting part is made of a flexible material, preferably a soft material, and has a circular tube shape, wherein the helical groove is formed on the inner wall of the outer fitting part, the inner fitting part is covered by the outer fitting part, and the circumferential piece engages with the helical groove of the outer fitting part, the helical slot of the inner fitting part retains with the inner wall of the outer fitting part. Thereafter, the outer fitting part and the inner fitting part are fitted on the handle grip, and the retainer is fitted on and clamps the mounting section of the inner fitting part, hence the outer fitting part and the inner fitting part are connected firmly.

The inventive design allows to firmly and reliably mounting the handle grip sleeve structure to the handlebar grip section without exerting a too high locking force via the retainer and the mounting section to the handlebar. This is very advantageous in the case that the handlebar grip section of the bicycle is made of a thin and lightweight material, e.g. a carbon fiber reinforced compound material. Although the locking force can be low the bicycle rider has a firm gripping contact via the inventive handle grip sleeve structure to the handlebar grip section as the helically wound inner fitting part tightly surrounds the handlebar grip section and distributes the effective clamping force over a larger axial portion of the handlebar grip section with a reduced local pressure to the handlebar material. When the bicycle rider exerts torsion forces to the handle grip sleeve structure according to the invention in a rearwardly downwards directed twisting direction the clamping force of the helically wound inner fitting part will become higher, the inner fitting part will be further tightened and the risk of a twisting movement of the grip sleeve on the handlebar is further reduced.

Preferably, a friction portion is arranged on the outer surface of the outer fitting part and is provided in the form of any one of the following: multiple lines, patterns, and letters so as to obtain gripping stability, using comfort, and advertisement purpose.

In another preferred embodiment, the inner fitting part includes a protrusion extending outwardly from the circumferential piece thereof, and the outer fitting part includes a stop projection corresponding to the protrusion, wherein when the outer fitting part covers the inner fitting part, the projection shields the protrusion.

In a further preferred embodiment of the invention the circumferential piece is designed as a helically wound framework structure. This embodiment is a lightweight construction in which the through openings in the framework structure constitute additional structural elements for a form-fit with the material of the outer fitting part.

### BRIEF DESCRIPTION OF THE DRAWINGS

- FIG. 1: is a perspective view showing the assembly of a handle grip sleeve structure for a bicycle according to a first embodiment of the present invention;
- FIG. 2: is a cross-sectional perspective view showing the exploded components of the handle grip sleeve structure for the bicycle according to the first embodiment of the present invention;
- FIG. 3: is a cross sectional view showing the assembly of the handle grip sleeve structure for the bicycle according to the first embodiment of the present invention;
- FIG. 4: is a perspective view showing the assembly of a handle grip sleeve structure for a bicycle according to a second embodiment of the present invention;
- FIG. 5: is a perspective view showing the assembly of a handle grip sleeve structure for a bicycle according to a third embodiment of the present invention;
- FIG. 6: is a cross-sectional perspective view showing the exploded components of the handle grip sleeve structure for the bicycle according to the third embodiment of the present invention and
- Fig. 7: shows a further alternative embodiment of the handle grip sleeve structure with a lightweight inner fixing part.

### DETAILED DESCRIPTION OF THE PREFERRED EMBODIMENTS

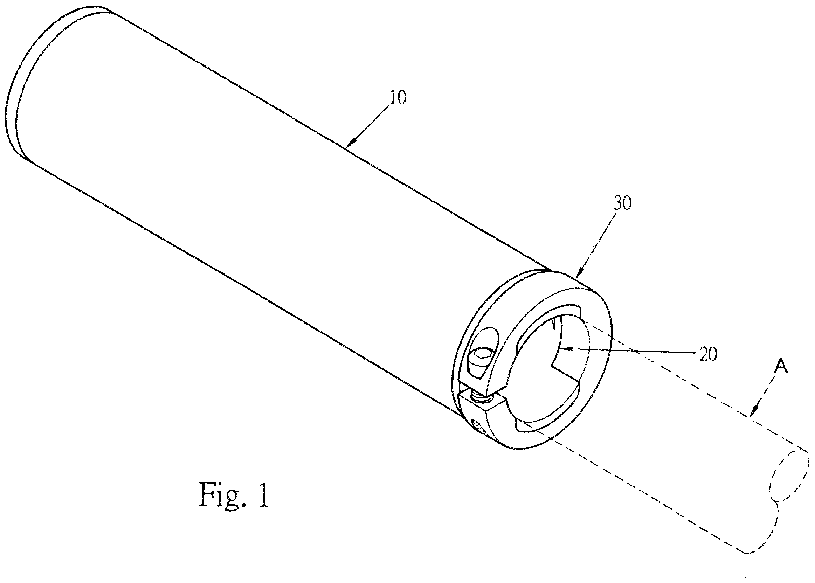

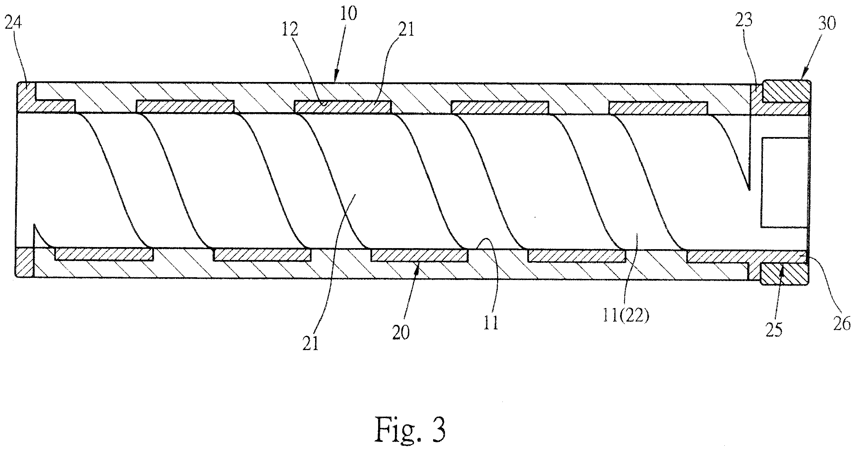

With reference to FIGS. 1 to 3, a handle grip sleeve structure for a bicycle according to a first embodiment of the present invention comprises: an outer fitting part 10, an inner fitting part 20, and a retainer 30.

The outer fitting part 10 is of cylindrical or circular tubular shape and is made of a flexible, preferably soft, material which is elastic and softer than the material of the inner fitting part 20, and an inner diameter of the outer fitting part 10 is equal to an outer diameter of a handle grip A, e.g. a grip portion of a handlebar, so that the outer fitting part 10 is fitted to the handle grip A. The outer fitting part 10 includes a helical groove 12 defined on an inner wall 11 thereof, and between the helical groove 12 and the inner wall 11 of the outer fitting part 10 is defined an uneven helical surface.

The inner fitting part 20 includes a ribbon-like circumferential piece 21 wound in a helical tubular shape, a helical slot 22 separates the windings of the circumferential piece 21. A first flange 23 is arranged on a first end of the inner fitting part 20, a second flange 24 is arranged on a second end of the inner fitting part 20 remote from the first flange 23, at least one mounting section 25 extends axially outwardly from the first flange 23, and at least one axially protruding rib 26 is formed on the at least one mounting section 25, individually. In this embodiment, a mounting section 25 extends outwardly from the first flange 23, and two axially extending and circumferentially spaced apart ribs 26 are formed on the mounting section 25. An inner diameter of the inner fitting part 20 is equal to the outer diameter of the handle grip A so that the inner fitting part 20 is adapted to be fitted on the handle grip A. In addition, when the inner fitting part 20 is covered by the outer fitting part 10, the circumferential piece 21 engages with the helical groove 12 of the outer fitting part 10, and the helical slot 22 of the inner fitting part 20 retains with the inner wall 11 of the outer fitting part 10. The inner fitting part 20 is made of an inflexible material which can be hard or rigid, although the inner fitting part 20 itself is flexible due to its band-like shape and can be wound as shown in the drawings.

The retainer 30 is designed in a ring shape and includes a slit opening 31 which is defined between two end portions of the retainer 30. Two orifices 32 are formed on or in the two end portions of the retainer 30, respectively. Two indentations 33 are separately formed on a radially inner surface of the retainer 30 corresponding to the two ribs 26 of the mounting section 25 so that the retainer 30 fits on and clamps the mounting section 25, wherein the two ribs 26 engage with the two indentations 33 individually. A screw bolt 34 screws with the two orifices 32 so that the retainer 30 clamps the mounting section 25, and the mounting section 25 retains the handle grip A, hence the outer fitting part 10 and the inner fitting part 20 are fitted on the handle grip A.

The outer fitting part 10 is made of the flexible, softer material, the inner fitting part 20 is made of the hard or rigid material, the outer fitting part 10 covers and engages with the inner fitting part 20, and the inner fitting part 20 is clamped by the retainer 30, such that the outer fitting part 10 and the inner fitting part 20 are fitted on the handle grip A securely.

In operation, the outer fitting part 10 covers the inner fitting part 20, the circumferential piece 21 of the inner fitting part 20 engages with the helical groove 12 of the outer fitting part 10, and the helical slot 22 of the inner fitting part 20 retains with the inner wall 11 of the outer fitting part 10. Thereafter, the outer fitting part 10 and the inner fitting part 20 are fitted on the handle grip A, the retainer 30 is fitted on and clamps the mounting section 25 of the inner fitting part 20, and the screw bolt 34 screws with the two orifices 32 of the retainer 30.

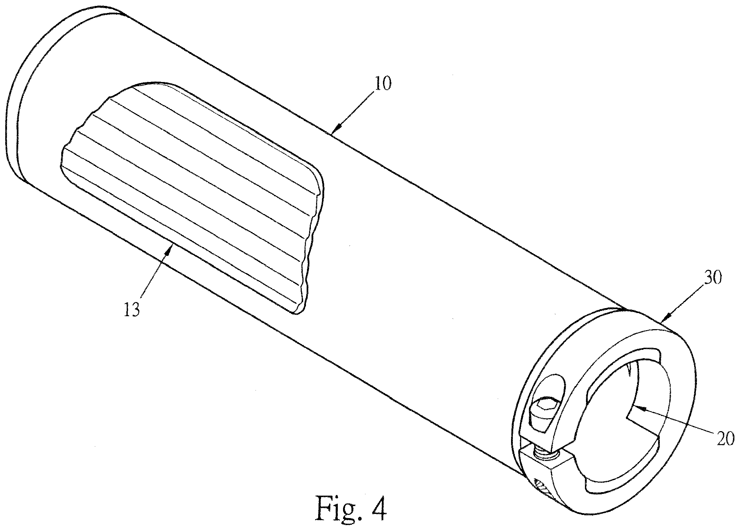

Referring to FIG. 4, a handle grip sleeve structure of a second embodiment which is different from that of the first embodiment comprises: a friction portion 13 arranged on an outer surface of the outer fitting part 10, wherein the friction portion 13 is any one of multiple lines, patterns, and letters so as to obtain griping stability, using comfort, and advertisement purpose.

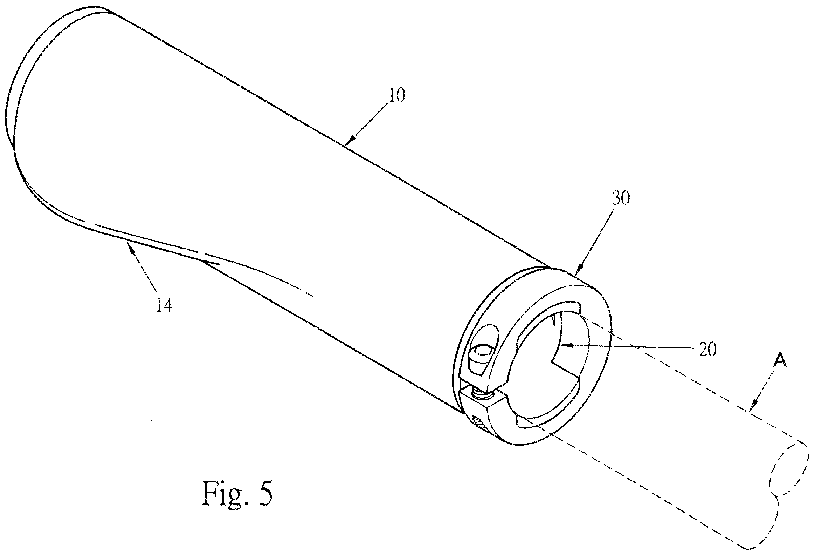

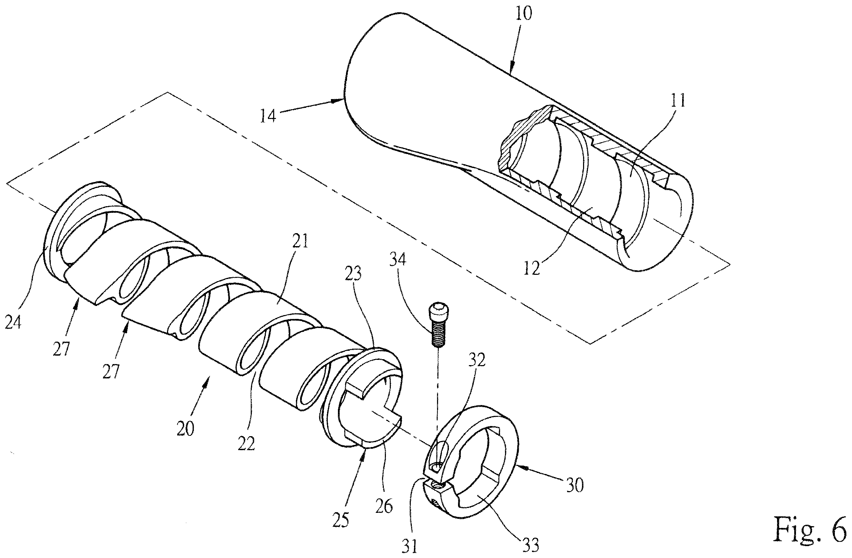

As shown in FIGS. 5 and 6, a handle grip sleeve structure of a third embodiment which is different from that of the first embodiment comprises: a protrusion 27 extending outwardly from the circumferential piece 21 of the inner fitting part 20, and a stop projection 14 corresponding to the protrusion 27, such that when the outer fitting part 10 covers the inner fitting part 20, the projection 14 shields the protrusion 27 so that the projection 14 and the protrusion 27 support a user's hand.

Accordingly, the inner fitting part 20 is made of the hard or rigid material, the circumferential piece 21 of the inner fitting part 20 is wound in the helical tube shape, and the helical slot 22 separates the windings of the circumferential piece 21. The outer fitting part 10 is made of a soft, flexible material and is in the circular tube shape, wherein the helical groove 12 is defined on the inner wall 11 of the outer fitting part 10. When the inner fitting part 20 is covered by the outer fitting part 10, the helically wound circumferential piece 21 engages with the helical groove 12 of the outer fitting part 10, the helical slot 22 of the inner fitting part 20 retains with the inner wall 11 of the outer fitting part 10. Thereafter, the outer fitting part 10 and the inner fitting part 20 are fitted on the handle grip A, and the retainer 30 is fitted on and clamps the mounting section 25 of the inner fitting part 20, hence the outer fitting part 10 and the inner fitting part 20 are connected firmly. Preferably, the friction portion 13 is arranged on the outer surface of the outer fitting part 10 and is any one of the multiple lines, the patterns, and the letters so as to obtain griping stability, using comfort, and advertisement purpose.

In addition, the protrusion 27 extends outwardly from the circumferential piece 21 of the inner fitting part 20, and the outer fitting part 10 includes the stop projection 14 corresponding to the protrusion 27, such that the projection 14 and the protrusion 27 support the user's hand stably.

Thereby, the outer fitting part 10 and the inner fitting part 20 are fitted on the handle grip A securely and have using comfort.

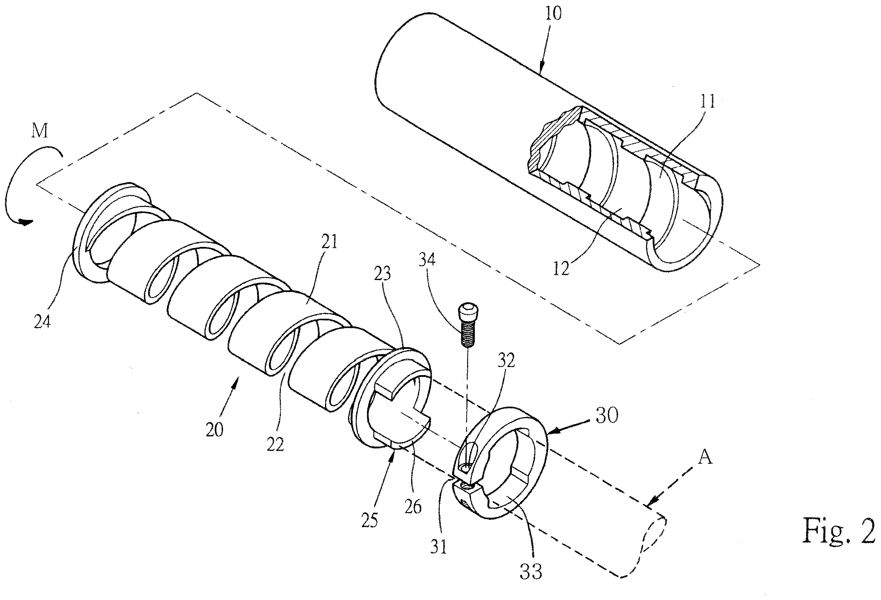

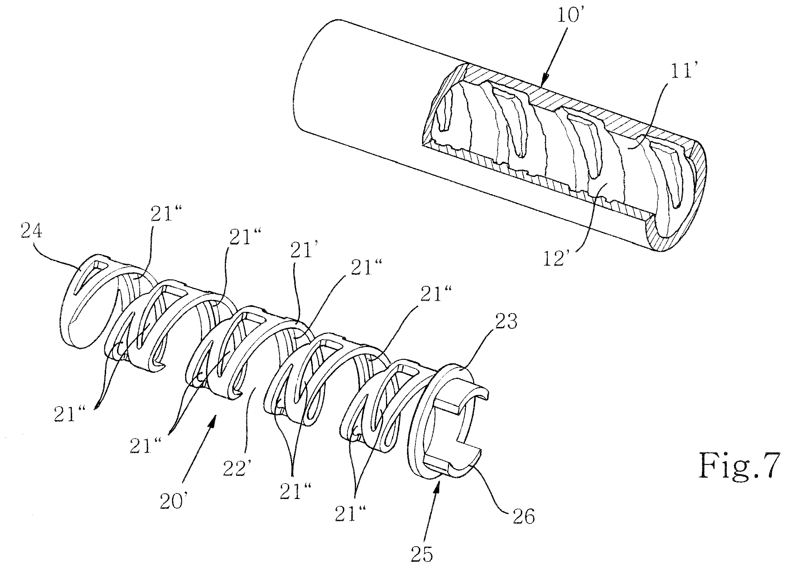

Fig. 7 shows a further embodiment of the handle grip sleeve structure according to the invention. This embodiment resembles the embodiment shown in Fig. 2 wherein, however, the circumferential piece 21' of the inner fitting part 20' and the inner wall 11' of the outer fitting part 10 are designed different with respect to the comparable parts of the embodiment shown in Fig. 2. Those parts of the handle grip sleeve shown in Fig. 7 which are not changed with respect to the embodiment of Fig. 2 carry the same reference numerals.

The circumferential piece 21' is also formed as a helically wound strip of a hard or rigid material, however, this strip is formed as a framework structure and is thus provided with a plurality of through holes 21". This particular lightweight design reduces the mass of the hard or rigid material of the circumferential piece 21'. In addition, the through holes 21" generated by this framework structure serve as receptacles for accommodating portions of the softer, flexible and elastic material of the inner wall 11' of the outer fitting part 10'. Thus, the inner wall 11' of the outer fitting part 10' does not necessarily be provided with a preformed helical groove (like in the embodiment of Fig. 2) if the material of the inner wall 11' is soft, elastic and flexible enough to intrude into the helical slot 22' and the through holes 21" of the circumferential piece 21' when the outer fitting part 10' is mounted to the inner fitting part 20' and a grip force is exposed to the outer fitting part 10'. In such an outer fitting part 10' the helical groove 12' is automatically self-formed when the outer fitting part 10' and the inner fitting part 20' are fitted together and a grip force is applied. The exploded view of Fig. 7 shows the outer fitting part 10' after it had already been mounted to the inner fitting part 20' so that the helical groove 12' is already and still pressed into the soft and elastic material of the inner wall 11'. When the outer fitting part 10' is new, the radially inner surface of the inner wall 11' can be of even cylindrical shape.

It is to be stated that the inner fitting part 20' shown in and described with respect to Fig. 7 can also be used together with the outer fitting part 10 shown in and described with respect to Fig. 2 and that the outer fitting part 10' shown in and described with respect to Fig. 7 can also be used with the inner fitting part 20 shown in and described with respect to Fig. 2. It is further to be noted that the embodiment shown in and described with respect to Fig. 7 can be combined with features shown in and described with respect to Fig. 4 and/or Fig. 5. Mounting section 25 of the embodiment shown in Fig. 7 is designed in the same manner as mounting section 25 of the embodiment shown in Fig. 2. Thus, the same retainer 30 can be used with the embodiment of Fig. 7.

As the handle grip sleeve structure according to the invention is fixed to the handle grip A of a bicycle at the first end of the inner fitting part with the mounting section 25 clamped by the retainer 30, the gripping section of the handle grip sleeve extending from the mounting section 25 to the second end of the inner fitting part 20 freely surrounds the grip portion of the handlebar. In the left hand handle grip sleeve structure shown in the drawings, the winding direction of the circumferential piece 21 from the first end thereof (connected to the mounting section 25) to the second end thereof is counterclockwise. When a moment M is exerted on the outer fitting part 10 by the hand of the bicycle rider (as symbolized by arrow M in Fig. 2) the outer fitting part 10 is turned counterclockwise in Fig.2 and the inner fitting part 20 follows this movement due to friction forces and positive locking between the outer fitting part 10 and the inner fitting part 20. This leads in tightening the helical circumferential piece 21 around the grip portion of the handlebar awarding the bicycle rider a tight and direct gripping contact to the bicycle free of backlash. As it is obvious that the handle grip sleeve system shown in the drawings is a left hand handle grip sleeve system, a person skilled in the art understands that a right hand handle grip sleeve system is designed mirror-inverted, in particular with respect to the winding direction of the helical circumferential piece which is clockwise like a corkscrew in the right hand handle grip sleeve system. Thus, also the right hand handle grip sleeve has the same function as the left hand one.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the scope of the invention.

### Reference numerals list

- 10: outer fitting part
- 10': outer fitting part
- 11: inner wall
- 11': inner wall
- 12: helical groove
- 12': helical groove
- 13: friction portion
- 14: stop projection
- 20: inner fitting part
- 20': inner fitting part
- 21: circumferential piece
- 21': circumferential piece
- 21": through holes
- 22: helical slot
- 22': helical slot
- 23: first flange
- 24: second flange
- 25: mounting section
- 26: axially protruding rib
- 27: protrusion
- 30: retainer
- 31: slit opening
- 32: orifice
- 33: indentation
- 34: screw bolt

- A: handle grip

## Claims

1. A handle grip sleeve structure for a bicycle comprising:
- an inner fitting part (20; 20') made of an inflexible material and adapted to fit on a handle grip (A), wherein said inner fitting part (20; 20') includes
• a circumferential piece (21; 21') wound in a helix-like tubular shape,
• a helical slot (22; 22') separating the windings of the circumferential piece (21; 21'), and
• at least one mounting section (25) extending outwardly from a first end of said inner fitting part (20; 20');
- an outer fitting part (10; 10') formed in a cylindrical tubular shape and made of a flexible material, preferably a soft material, wherein said outer fitting part (10; 10') is adapted to fit on said handle grip (A) thereby covering the inner fitting part (20; 20') and wherein said outer fitting part (10; 10') has a helical groove (12; 12') formed on an inner circumferential wall (11; 11') of the outer fitting part (10; 10');
- a retainer (30) formed in a slit ring shape and including a slit opening (31) defined between two opposing end portions of the retainer (30), said retainer (30) being adapted to fit on the at least one mounting section (25), wherein the retainer (30) includes two orifices (32) formed at the two end portions of the retainer (30) respectively, and a locking bolt (34) extending through the two orifices (32) in order to clamp the at least one mounting section (25) on the handle grip (A).

2. The handle grip sleeve structure as claimed in claim 1,
wherein the inner fitting part (20; 20') includes a first flange (23) arranged on the first end thereof, and the inner fitting part (20; 20') includes a second flange (24) arranged on a second end thereof opposite to the first flange (23), wherein the at least one mounting section (25) extends outwardly from the first flange (23).

3. The handle grip sleeve structure as claimed in claim 2,
wherein at least one rib (26) is formed on the at least one mounting section (25), and at least one indentation (33) is formed on an inner surface of the retainer (30) and corresponds to the at least one rib (26) of the mounting section (25), wherein the retainer (30) fits on and clamps the mounting section (25).

4. The handle grip sleeve structure as claimed in claim 1,
wherein the outer fitting part (10; 10') includes a friction portion (13) arranged on an outer surface thereof, and the friction portion (13) is any one of multiple lines, patterns, and letters.

5. The handle grip sleeve structure as claimed in claim 1,
wherein the inner fitting part (20; 20') includes a protrusion (27) extending outwardly from the circumferential piece (21; 21') thereof, and the outer fitting part (10; 10') includes a stop projection (14) corresponding to the protrusion (27), wherein when the outer fitting part (10; 10') covers the inner fitting part (20; 20'), the projection (14) shields the protrusion (27).

6. The handle grip sleeve structure as claimed in claim 1,
wherein said circumferential piece (21') is designed as a helically wound framework structure.

## Patentansprüche

1. Handgriffhülsenstruktur für ein Fahrrad aufweisend:
- ein inneres Befestigungsteil (20; 20'), hergestellt aus einem unflexiblen Material und angepasst, um auf einen Handgriff (A) zu passen, wobei das innere Befestigungsteil (20; 20') Folgendes enthält:
• ein Umfangsstück (21; 21'), das in einer helixartigen rohrförmigen Gestalt gewunden ist,
• einen helixförmigen Schlitz (22, 22'), der die Windungen des Umfangsstücks (21; 21') voneinander trennt, und
• zumindest einen Befestigungsabschnitt (25), der sich von einem ersten Ende des inneren Befestigungsteils (20; 20') nach außen erstreckt;
- ein äußeres Befestigungsteil (10; 10'), das in einer zylindrischen rohrförmigen Gestalt geformt ist und aus einem flexiblen Material, vorzugsweise einem weichen Material, hergestellt ist, wobei das äußere Befestigungsteil (10; 10') angepasst ist, um, das innere Befestigungsteil (20; 20') abdeckend, auf den Handgriff (A) zu passen, und wobei das äußere Befestigungsteil (10; 10') eine in einer inneren Umfangswand (11; 11') des äußeren Befestigungsteils (10; 10') ausgebildete helixartige Nut (12; 12') aufweist;
- einen Halter (30), der in Form eines geschlitzten Rings ausgebildet ist und eine Schlitzöffnung (31) aufweist, die zwischen zwei einander gegenüber gelegenen Endabschnitten des Halters (30) bestimmt ist, wobei der Halter (30) angepasst ist, um auf den zumindest einen Befestigungsabschnitt (25) zu passen, wobei der Halter (30) zwei Öffnungen (32) aufweist, die jeweils an den beiden Endabschnitten des Halters (30) ausgebildet sind, und wobei sich ein Verriegelungsbolzen (34) durch die beiden Öffnungen (32) erstreckt, um den zumindest einen Befestigungsabschnitt (25) auf den Handgriff (A) zu klemmen.

2. Handgriffhülsenstruktur nach Anspruch 1,
wobei das innere Befestigungsteil (20; 20') einen ersten Flansch (23) enthält, der an dessen erstem Ende angeordnet ist, und wobei das innere Befestigungsteil (20; 20') einen zweiten Flansch (24) enthält, der an einem zweiten Ende des inneren Befestigungsteils auf der dem ersten Flansch (23) gegenüber gelegenen Seite angeordnet ist, wobei sich der zumindest eine Befestigungsabschnitt (25) vom ersten Flansch (23) nach außen erstreckt.

3. Handgriffhülsenstruktur nach Anspruch 2,
wobei an dem zumindest einen Befestigungsabschnitt (25) zumindest eine Rippe (26) ausgebildet ist und wobei zumindest eine Vertiefung (33) in einer inneren Oberfläche des Halters (30) ausgebildet ist und der zumindest einen Rippe (26) des Befestigungsabschnitts (25) entspricht, wobei der Halter (30) auf den Befestigungsabschnitt (25) passt und diesen klemmt.

4. Handgriffhülsenstruktur nach Anspruch 1,
wobei das äußere Befestigungsteil (10; 10') einen Reibungsabschnitt (13) enthält, der auf einer äußeren Oberfläche des äußeren Befestigungsteils angeordnet ist, und wobei der Reibungsabschnitt (13) beliebig aus einer Mehrzahl von Linien, Mustern oder Buchstaben gebildet ist.

5. Handgriffhülsenstruktur nach Anspruch 1,
wobei das innere Befestigungsteil (20, 20') eine Auskragung (27) enthält, die sich von dessen Umfangsstück (21, 21') nach außen erstreckt, und wobei das äußere Befestigungsteil (10; 10') einen Arretiervorsprung (14) enthält, der der Auskragung (27) entspricht, wobei der Vorsprung (14) die Auskragung (27) abschirmt, wenn das äußere Befestigungsteil (10; 10') das innere Befestigungsteil (20; 20') überdeckt.

6. Handgriffhülsenstruktur nach Anspruch 1,
wobei das Umfangsstück (21') als helixförmig gewundene Rahmenwerkstruktur gestaltet ist.

## Revendications

1. Structure de manchon de préhension pour poignée de bicyclette, comprenant :
- une partie d'engagement intérieure (20 ; 20') réalisée en matériau non flexible et adaptée à s'engager sur une poignée (A), dans laquelle ladite partie d'engagement intérieure (20 ; 20') inclut
- une pièce circonférentielle (21 ; 21') enroulée sous une forme tubulaire semblable à une hélice,
- une fente hélicoïdale (22 ; 22') séparant les spires de la pièce circonférentielle (21 ; 21'), et
- au moins une section de montage (25) s'étendant vers l'extérieur depuis une première extrémité de ladite partie d'engagement intérieure (20 ; 20') ;
- une partie d'engagement extérieure (10 ; 10') formée sous une forme tubulaire cylindrique et réalisée en un matériau flexible, de préférence un matériau souple, dans laquelle ladite partie d'engagement extérieure (10 ; 10') est adaptée à s'engager sur ladite poignée (A) en couvrant de ce fait la partie d'engagement intérieure (20 ; 20'), et dans laquelle ladite partie d'engagement extérieure (10 ; 10') présente une gorge hélicoïdale (12 ; 12') formée sur une paroi circonférentielle intérieure (11 ; 11') de la partie d'engagement extérieure (10 ; 10') ;
- un moyen de retenue (30) formé sous la forme d'un anneau fendu et incluant une ouverture de fente (31) définie entre deux portions terminales opposées du moyen de retenue (30), ledit moyen de retenue (30) étant adapté à s'engager sur ladite au moins une section de montage (25), dans laquelle le moyen de retenue (30) inclut deux orifices (32) formés au niveau des deux portions terminales du moyen de retenue (30) respectivement, et un boulon de blocage (34) s'étendant à travers les deux orifices (32) afin de pincer ladite au moins une section de montage (25) sur la poignée (A).

2. Structure de manchon de préhension pour poignée selon la revendication 1,
dans laquelle la partie d'engagement intérieure (20 ; 20') inclut une première bride (23) agencée sur sa première extrémité, et la partie d'engagement intérieure (20 ; 20') inclut une seconde bride (24) agencée sur sa seconde extrémité à l'opposé de la première bride (23), dans laquelle ladite au moins une section de montage (25) s'étend vers l'extérieur depuis la première bride (23).

3. Structure de manchon de préhension pour poignée selon la revendication 2,
dans laquelle au moins une nervure (26) est formée sur ladite au moins une section de montage (25), et au moins un cran (32) est formé sur une surface intérieure du moyen de retenue (30) et correspond à ladite au moins une nervure (26) de la section de montage (25), dans laquelle le moyen de retenue (30) s'engage sur et pince la section de montage (25).

4. Structure de manchon de préhension pour poignée selon la revendication 1,
dans laquelle la partie d'engagement extérieure (10 ; 10') inclut une portion de friction (13) agencée sur sa surface extérieure, et la portion de friction (13) est constituée par l'un quelconque des moyens suivants : des lignes multiples, des motifs, et des lettres.

5. Structure de manchon de préhension pour poignée selon la revendication 1,
dans laquelle la partie d'engagement intérieure (20 ; 20') inclut une saillie (27) s'étendant vers l'extérieur depuis la pièce circonférentielle (21 ; 21') de celle-ci, et la partie d'engagement extérieure (10 ; 10') inclut une projection d'arrêt (14) correspondant à la saillie (27), dans laquelle quand la partie d'engagement extérieure (10 ; 10') couvre la partie d'engagement intérieure (20 ; 20'), la projection (14) cache la saillie (27).

6. Structure de manchon de préhension pour poignée selon la revendication 1,
dans laquelle ladite pièce circonférentielle (21') est conçue sous la forme d'une structure du type ossature enroulée en hélice.
